# EUROPÄISCHE PATENTSCHRIFT

(11) **EP 1 989 601 B1**
(45) Veröffentlichungstag und Bekanntmachung des Hinweises auf die Patenterteilung: **24.11.2010**
(21) Anmeldenummer: 06805455.0
(22) Anmeldetag: 20.10.2006
(51) Int. Cl.: G05B 19/418

(54) **SYSTEM UND VERFAHREN ZUR ANALYSE EINES FERTIGUNGSPROZESSES**
SYSTEM AND METHOD FOR ANALYSING A PRODUCTION PROCESS
SYSTEME ET PROCEDE POUR ANALYSER UN PROCESSUS DE FABRICATION

(30) Priorität: 28.02.2006 DE 102006009263
(43) Veröffentlichungstag der Anmeldung: 12.11.2008
(73) Patentinhaber: SIEMENS AKTIENGESELLSCHAFT, 80333 München (DE)
(72) Erfinder: DIEZEL, Matthias, 90482 Nürnberg (DE); HAMM, Carsten, 91058 Erlangen (DE); HOLZ, Marc, 91058 Erlangen (DE); KOCH, David, 90478 Nürnberg (DE)
(86) Internationale Anmeldenummer: PCT/DE2006/001855
(87) Internationale Veröffentlichungsnummer: WO 2007/098724

(56) Entgegenhaltungen:
- EP-A2- 0 104 503
- GB-A- 2 118 328
- JP-A- 11 282 520
- JP-A- 2001 209 411
- DEICHMANN K ET AL: "GRAFISCHES NC-TESTSYSTEM ZUR UMFASSENDEN SIMULATION" WERKSTATT UND BETRIEB, CARL HANSER VERLAG, MUNCHEN, DE, Bd. 129, Nr. 1/2, 1. Februar 1996 (1996-02-01), Seiten 26-29, XP000584023 ISSN: 0043-2792

## Beschreibung

Die Erfindung betrifft ein System und ein Verfahren zur Analyse eines Fertigungsprozesses an dem mindestens eine Fertigungseinrichtung beteiligt ist.

Ein derartiges System bzw. Verfahren kommt beispielsweise bei der Entwicklung neuer Programme für numerisch gesteuerte Werkzeugmaschinen zum Einsatz. Moderne Werkzeugmaschinen verfügen über eine numerische Steuerung, die es erlaubt, einen Fertigungsprozess softwaretechnisch in Form eines NC-Programms zu definieren. Innerhalb eines solchen NC-Programms kann ein Anwender Vorgänge, die eine Werkzeugmaschine zur Bearbeitung eines Werkstücks durchführen soll, in Form einzelner Anweisungen definieren. Beispielsweise wird in einem solchen NC-Programm festgelegt, in welcher Zeit oder mit welcher Geschwindigkeit ein Werkzeug zu Beginn eines Fertigungsprozesses in eine bestimmte Startposition gefahren werden soll. Bei einer numerisch gesteuerten Fräsmaschine wird eine Fräsbahn im NC-Programm definiert, die das Werkzeug zur Bearbeitung des Werkstücks mit einer ebenfalls im Programm definierten Vorschubgeschwindigkeit abfahren soll.

NC-gesteuerte Werkzeugmaschinen bieten einem Anwender ein Höchstmaß an Flexibilität hinsichtlich der zu fertigenden Endprodukte. Soll auf einer Werkzeugmaschine ein neues Produkt gefertigt werden, so ist zu diesem Zweck ein neues NC-Programm zu erstellen oder ein bestehendes zu modifizieren. Bevor dieses NC-Programm zur Fertigung hoher Stückzahlen eingesetzt wird, ist eine Analyse, Bewertung und Optimierung des Programms wünschenswert.

In der Regel werden neue NC-Programme bzw. Teil- oder Unterprogramme vorab mit einem geeigneten Programmiersystem unabhängig vom Zielsystem entwickelt. Bevor das Programm zur Massenfertigung eingesetzt wird, wird es häufig auf einem Simulationssystem getestet. Für das eigentliche Zielsystem wird hierbei in der Regel ein abstraktes Steuerungsmodell eingesetzt. Schließlich kann das Programm auch auf dem eigentlichen Zielsystem selbst, also auf der realen Steuerung und der realen Maschine, in Echtzeit getestet werden. Ein Test auf dem eigentlichen Zielsystem in Echtzeit liefert im Vergleich zu einer Simulation auf einem Simulationssystem aufgrund der bei der Simulation verwendeten abstrakten und vereinfachten Modelle die genaueren und aussagekräftigeren Ergebnisse, ist jedoch erheblich zeitaufwendiger.

Zur Analyse und Optimierung des Laufzeitverhaltens von Softwareprogrammen sind so genannte Profiler bekannt. Profiler helfen einem Entwickler, durch Analyse und Vergleich von laufenden Programmen Problembereiche aufzudecken und zu eliminieren. Profiler Werkzeuge haben im Allgemeinen die Zielsetzung, eine möglichst effiziente und damit schnelle Ausführung eines Softwareprogrammes auf einer Recheneinheit zu ermöglichen

Aus DE 199 28 980 A1 sind ein Verfahren, ein System und eine Vorrichtung bekannt zur Erzeugung und Optimierung von Maschinencode in einem Laufzeit-Compiler aus einer Gruppe von Bytecodes. Mit Hilfe eines während eines oder mehrerer Programmabläufe durchgeführten "Profiling"-Prozesses werden Kenntnisse eines in einem Programm verwendeten Klassensatzes gesammelt, die zur Optimierung des Programms für eine spezifische Laufzeitumgebung genutzt werden können.

In heutigen Fertigungsanlagen ist es aufgrund einer geforderten optimalen Maschinenauslastung üblich, Fertigungsabläufe parallel auf mehreren Fertigungseinrichtungen abzuarbeiten. Sämtliche Ressourcen für die Bearbeitung müssen dabei auf einander abgestimmt werden. Die Planung und die anschließende Koordinierung dieser Abläufe sind sehr komplex. Die eigentliche Koordinierung der Mehrmaschinenbedienung wird darum in der Praxis oft von einem Maschinenbediener selbst vorgenommen. Eine vor gelagerte Fertigungsplanung ist bei einem Einsatz mehrerer Fertigungseinrichtungen im Rahmen eines Fertigungsprozesses nur schwer möglich bzw. nur auf der Basis von Erfahrungswerten oder Schätzungen durchzuführen. Je exakter die Planung des Mehrmaschinenbetriebs, desto höher ist der Planungsaufwand, der zur Maximierung der Maschinenauslastung erforderlich ist.

Bisher werden verschiedene Verfahren eingesetzt, um bei einem Fertigungsprozess eine Mehrmaschinenbedienung zu planen. Im einfachsten Fall erfolgt die Fertigungsplanung auf Basis einer groben Schätzung unter Zuhilfenahme von Erfahrungswerten. In diesen Erfahrungswerten sind alle relevanten Vorgänge enthalten, wie z.B. automatische Abläufe (Drehen, Fräsen), manuelle Eingriffe (Werkstück umspannen) oder Einschränkungen des Betriebs durch betriebliche Erfordernisse wie Arbeitszeit, Ruhepausen oder Essenspausen. Die genaue Strategie der Mehrmaschinenbedienung wird hierbei in der Regel vom Maschinenbediener selbst festgelegt.

Bei einem etwas genaueren jedoch auch sehr viel aufwendigeren Verfahren werden alle Vorgänge in einer Fertigungslinie aufgelistet und mit dem jeweiligen geschätzten oder ermittelten Zeitbedarf versehen. Hierbei müssen alle Vorgänge, die sich durch eine konkrete Mehrmaschinebedienung ergeben, zuvor erfasst werden.

Aus der JP 11 282520 ist ein Verfahren bekannt, bei dem mittels Simulation für einen Fertigungsprozeß für jede Anweisung der Echtzeitbedarf ermittelt und ein Datensatz erzeugt wird.

Die GB-A-2 118 328 beschreibt die Analyse eines Fertigungsprozesses an dem mindestens eine von einem Steuerungsprogramm gesteuerte Fertigungseinrichtung beteiligt ist und Erzeugen eines zugehörigen Datensatzes mittels eines Zeit-Berechnungsprogrammes.

Der Erfindung liegt die Aufgabe zugrunde, eine verbesserte Analyse eines Fertigungsprozesses zur Fertigungsplanung zu ermöglichen.

Diese Aufgabe wird durch ein Verfahren zur Analyse eines Fertigungsprozesses gelöst, an dem mindestens eine, von einem Steuerungsprogramm gesteuerte Fertigungseinrichtung beteiligt ist, wobei das Verfahren folgenden Verfahrenschritten aufweist:
- Simulation mindestens eines Programmteils des Steuerungsprogramms mit einem Simulationsprogramm und Protokollieren von hierbei ausgeführten Anweisungen
- wobei zur Simulation des mindestens einen Programmteils und zur Erzeugung eines Datensatzes auf ein für die Fertigungseinrichtung charakteristisches Maschinenmodell und dessen Konfigurationsdaten zugegriffen wird, währenddessen und
- Erzeugen des zugehörigen Datensatzes, in dem den protokollierten Anweisungen jeweils der während der Simulation ermittelte Echtzeitbedarf einer Aktion zugeordnet ist, die durch die protokollierte Anweisung auf der Fertigungseinrichtung bewirkt wird wobei
- die während einer Ausführung des Programmteils auf der Fertigungseinrichtung real anfallenden Nebenzeiten anhand einer auf der Datenverarbeitungseinrichtung abgelegten Zeittabelle und/oder eines auf der Datenverarbeitungseinrichtung abgelegten Verhaltensmodells ermittelt und in dem Datensatz protokolliert werden.

Ferner wird die Aufgabe durch ein System zur Analyse eines Fertigungsprozesses gelöst, an dem mindestens eine, von einem Steuerungsprogramm gesteuerte Fertigungseinrichtung beteiligt ist, wobei das System
- einen ersten Speicherbereich für das Steuerungsprogramm,
- einen zweiten Speicherbereich für ein Simulationsprogramm
   und
- eine Ausführungseinheit zur Simulation mindestens eines Programmteils des Steuerungsprogramms mit dem Simulationsprogramm, zum Protokollieren von hierbei ausgeführten Anweisungen und zum Erzeugen eines zugehörigen Datensatzes, in dem den protokollierten Anweisungen jeweils der während der Simulation ermittelte Echtzeitbedarf einer Aktion zugeordnet ist, die durch die protokollierte Anweisung auf der Fertigungseinrichtung bewirkt wird,

- sowie eine mit der mindestens einen Fertigungseinrichtung (3) datentechnisch verbundene Datenverarbeitungseinrichtung, die einen dritten Speicherbereich umfasst, in dem ein für die Fertigungseinrichtung charakteristisches Maschinenmodell und dessen Konfigurationsdaten abgelegt sind aufweist und die Datenverarbeitungseinrichtung
- einen vierten Speicherbereich, in dem eine Zeittabelle und/oder ein Verhaltensmodell abgelegt ist,
- Mittel zur Ermittlung während einer Ausführung des jeweiligen Programmteils auf der Fertigungseinrichtung real anfallender Nebenzeiten anhand der Zeittabelle und/oder des Verhaltensmodells und
- Mittel zur Protokollierung der Nebenzeiten im zugehörigen Datensatz
   aufweist.

Darüber hinaus wird die Aufgabe durch ein Computerprogrammprodukt, welches zur Durchführung des zuvor genannten Verfahrens bei einem Ablauf auf einem Computer eingerichtet ist, gelöst.

Erfindungsgemäß wird mit dem Verfahren mindestens ein Steuerungsprogramm mittels eines Simulationsprogramms analysiert. Das Steuerungsprogramm ist zur Steuerung einer am Fertigungsprozess beteiligten Fertigungseinrichtung vorgesehen. Selbstverständlich können an dem Fertigungsprozess auch mehre Fertigungseinrichtungen beteiligt sein, wobei das Verfahren hierbei auf die entsprechend größere Anzahl von Steuerungsprogrammen in jeweils gleicher Art und Weise angewendet werden kann.

Erfindungsgemäß wird zunächst mindestens ein Programmteil des Steuerungsprogramms mit dem Simulationsprogramm simuliert. Die hierbei ausgeführten Anweisungen des Steuerungsprogramms werden protokolliert. Es wird ein zum Steuerungsprogramm zugehöriger Datensatz erzeugt, in dem den protokollierten Anweisungen jeweils der Echtzeitbedarf einer Aktion zugeordnet ist, die durch die protokollierte Anweisung auf der Fertigungseinrichtung bewirkt wird. Auf diese Art und Weise lässt sich für das gesamte Steuerungsprogramm eine tabellarische Aufstellung erzeugen, bei der jeder Anweisung des Steuerungsprogramms der zugehörige Echtzeitbedarf zugeordnet ist.

Die bei dieser Aufstellung angewandte Granularität, mit der die Anweisungen protokolliert werden, ist prinzipiell frei wählbar. So kann der Echtzeitbedarf für jede einzelne Anweisungen diskret ermittelt und protokolliert werden, wobei es sich bei der Anweisung z.B. um eine reine, auf dem Zielsystem durchzuführende Addition handeln kann. Alternativ kann aber auch ein Funktionsaufruf in diesem Sinn als Anweisung verstanden werden, wobei der Funktionsaufruf protokolliert wird und der Zeitbedarf für die Abarbeitung der kompletten Funktion auf der Fertigungseinrichtung ermittelt und im zugehörigen Datensatz abgespeichert wird.

Sind mehrere Fertigungseinrichtungen am Fertigungsprozess beteiligt, so kann mit deren Steuerungsprogrammen vollkommen analog verfahren werden. Auf diese Art und Weise erhält man nach Ablauf des Verfahrens mehrere Datensätze, die den Echtzeitbedarf der zugehörigen Steuerungsprogramme auf den entsprechenden Fertigungseinrichtungen für die einzelnen zur Ausführung des Fertigungsprozesses benötigten Anweisungen dokumentieren. Die Datensätze stellen somit eine nahezu ideale Basis für eine Optimierung des Fertigungsprozesses dar. Anhand dieser Datensätze lassen sich die Steuerungsprogramme derart optimieren, dass eine optimale durchschnittliche Maschinenauslastung für die Fertigungseinrichtungen erzielt werden kann und somit die Effizienz des gesamten Fertigungsprozesses maximiert werden kann.

In vorteilhafter Ausgestaltung der Erfindung wird zur Simulation des mindestens einen Programmteils und zur Erzeugung des Datensatzes auf ein für die Fertigungseinrichtung charakteristisches Maschinenmodell und dessen Konfigurationsdaten zugegriffen, wobei das Maschinenmodell und die Konfigurationsdaten auf einer mit der Fertigungseinrichtung datentechnisch verbundenen Datenverarbeitungseinrichtung gespeichert sind. Die Datenverarbeitungseinrichtung ist beispielsweise über ein firmeninternes Intranet oder auch das Internet mit der oder den am Fertigungsprozess beteiligten Fertigungseinrichtung(en) verbunden und ist somit auch in der Lage, auf deren aktuelle Konfiguration zuzugreifen und die Konfigurationsdaten bei der anschließenden Simulation zu verwenden. Mit Hilfe der Konfigurationsdaten können das oder die auf der Datenverarbeitungseinrichtung abgelegten Maschinenmodell(e) derart konfiguriert werden, dass sie das Verhalten der zugehörigen realen Fertigungseinrichtung möglichst gut wiedergeben. Eine Simulationsumgebung wie VNCK (Virtual NC Kernel) kann schließlich genutzt werden, um mit Hilfe des fertig konfigurierten Maschinenmodells den Echtzeitbedarf der einzelnen Anweisungen des Steuerungsprogramms zu ermitteln und den entsprechenden Datensatz zu erstellen. Bei mehreren am Fertigungsprozess beteiligten Fertigungseinrichtungen sind entsprechende mehrer Maschinenmodelle und mehrere Sätze von Konfigurationsdaten auf der Datenverarbeitungseinrichtung abgelegt. Zu jeder Fertigungseinrichtung wird ein zugehöriger Datensatz generiert.

Für eine möglichst exakte Analyse des Fertigungsprozesses und somit eine möglichst effiziente darauf basierende Fertigungsplanung müssen nicht nur die Hauptzeiten der beteiligten Maschinen bekannt sein, sondern auch die Nebenzeiten, während denen sich die entsprechenden Maschinen in einem unproduktiven Zustand befinden. Derartige Nebenzeiten können beispielsweise personalbedingt sein. Beispiele hierfür sind Ruhepausen, die Mittagszeit sowie die Grenzen der Arbeitszeit. Daher ist eine weitere Ausführungsform der Erfindung vorteilhaft, bei der die während einer Ausführung des Programmteils auf der Fertigungseinrichtung real anfallenden Nebenzeiten anhand einer auf der Datenverarbeitungseinrichtung abgelegten Zeittabelle und/oder eines auf der Datenverarbeitungseinrichtung abgelegten Verhaltensmodells ermittelt und in dem Datensatz protokolliert werden. Bei einer Visualisierung mehrerer Datensätze mehrerer Fertigungseinrichtungen können dann sowohl die Hauptzeiten als auch die Nebenzeiten in einer gemeinsamen Darstellung angezeigt werden.

In weiterer vorteilhafter Ausgestaltung der Erfindung wird das Verfahren mit einem Clientcomputer durchgeführt, der über ein Intranet oder das Internet mit der Datenverarbeitungseinrichtung verbunden ist. Hierbei fungiert die Datenverarbeitungseinrichtung als Server, an den insbesondere mehrere Clientcomputer als Arbeitsstation angeschlossen sind. Das Simulationsprogramm kann auf der Datenverarbeitungseinrichtung gespeichert sein und über den Clientcomputer gestartet werden. Alternativ kann das Simulationsprogramm auch auf jedem Client installiert sein, wobei das Maschinenmodell, die Zeittabelle und/oder das Verhaltensmodell von der Datenverarbeitungseinrichtung auf dem Clientcomputer geladen werden.

Hierbei ist insbesondere eine weitere Ausgestaltung der Erfindung vorteilhaft, bei der die Zeittabelle und/oder das Verhaltensmodell vom Clientcomputer aus modifiziert werden. Ändern sich beispielsweise die Arbeitszeiten, die dem Fertigungsprozess zugrunde liegen, so kann ein Anwender vom Clientcomputer aus eine auf der Datenverarbeitungseinrichtung abgelegte Zeittabelle entsprechend modifizieren. Ebenso kann vom Clientcomputer aus auch ein neues Verhaltensmodell auf die Datenverarbeitungseinrichtung geladen werden.

Bei einer weiteren vorteilhaften Ausführungsform der Erfindung wird der Echtzeitbedarf der von den protokollierten Anweisungen bewirkten Aktionen innerhalb des zugehörigen Datensatzes zu einer Bearbeitungszeit aufsummiert, die für einen Ablauf des Programmteils auf der entsprechenden Fertigungseinrichtung benötigt wird. Dies ist zweckmäßig, um den gesamten Zeitbedarf des simulierten Programmteils automatisch zu ermitteln. Handelt es sich, was in der Regel der Fall sein wird, bei dem Programmteil um das gesamte Steuerungsprogramm, so entspricht die Bearbeitungszeit der Zeit, die das reale Zielsystem für die Abarbeitung des entsprechenden Steuerungsprogramms beim eigentlichen Fertigungsprozess benötigt. Hierbei können insbesondere neben den Hauptzeiten der Maschine, in denen diese produktiv ist, auch deren unproduktive beispielsweise durch Werkzeugwechsel oder ähnliches verursachte Nebenzeiten Berücksichtigung finden. Bei der Optimierung der Steuerungsprogramme können verschiedene Informationen nützlich sein. So profitiert beispielsweise ein NC-Programmierer von einer vorteilhaften Ausgestaltung der Erfindung, bei der die Anzahl der Ausführungen der Anweisungen während der Simulation des Programmteils protokolliert wird.

Eine Anwendung des erfindungsgemäßen Verfahrens ist insbesondere innerhalb einer Ausführungsform der Erfindung zweckmäßig und vorteilhaft, bei der das Steuerungsprogramm ein NC-Programm für als numerisch gesteuerte NC-Maschinen ausgeführte Fertigungseinrichtungen ist.

In vorteilhafter Ausgestaltung der Erfindung wird das Verfahren für mindestens eine weitere am Fertigungsprozess beteiligte und von einem weiteren Steuerungsprogramm gesteuerte Fertigungseinrichtung durchgeführt. Die zuvor genannten Verfahrenschritte werden für beide Fertigungseinrichtungen bzw. deren Steuerungsprogramme in vollkommen analoger weise durchgeführt. Es resultiert je Fertigungseinrichtung bzw. Steuerungsprogramm ein Datensatz. Die Datensätze können miteinander verglichen werden, um den Gesamtprozess zu optimieren.

Insbesondere für ein manuell durchgeführtes Ableiten von Optimierungskriterien ist eine Ausgestaltung der Erfindung hilfreich, bei der die Datensätze der beiden Steuerungsprogramme in einer gemeinsamen Darstellung insbesondere grafisch visualisiert werden. Ein Planer kann somit sehr schnell erfassen, an welcher Stelle ein Optimierungsbedarf des Mehrmaschinenfertigungsprozesses existiert. Dadurch dass er die insbesondere grafische Darstellung beider Datensätze für beide Steuerungsprozesse zeitgleich erfassen kann, können die durch die jeweiligen Steuerungsprogramme verursachten Haupt- und Nebenzeiten der beteiligten Fertigungseinrichtung besser aufeinander abgestimmt werden.

In weiterer vorteilhafter Ausgestaltung der Erfindung werden die Datensätze der beiden Steuerungsprogramms zur Ableitung von Optimierungskriterien für den Fertigungsprozess miteinander verglichen. Diese Optimierungskriterien können automatisch durch eine insbesondere computerunterstützte Analyse der beiden Datensätze generiert werden.

Im Folgenden wird die Erfindung anhand der in den Figuren dargestellten Ausführungsbeispiele näher beschrieben und erläutert.

Es zeigen:
- FIG 1: eine Anwendung eines Systems zur Analyse eines Fer- tigungsprozesses bei der Erzeugung eines Datensat- zes für ein Steuerungsprogramm,
- FIG 2: eine mit dem System erzeugte grafische Darstellung des zum Steuerungsprogramm zugehörigen Datensatzes,
- FIG 3: ein als Clientserverarchitektur ausgeführtes System zur Analyse eines Fertigungsprozesses, an dem zwei Fertigungseinrichtungen beteiligt sind, und
- FIG 4: eine schematische Darstellung eines Verfahrens zur Analyse eines Fertigungsprozesses, an dem zwei Fer- tigungseinrichtungen beteiligt sind.

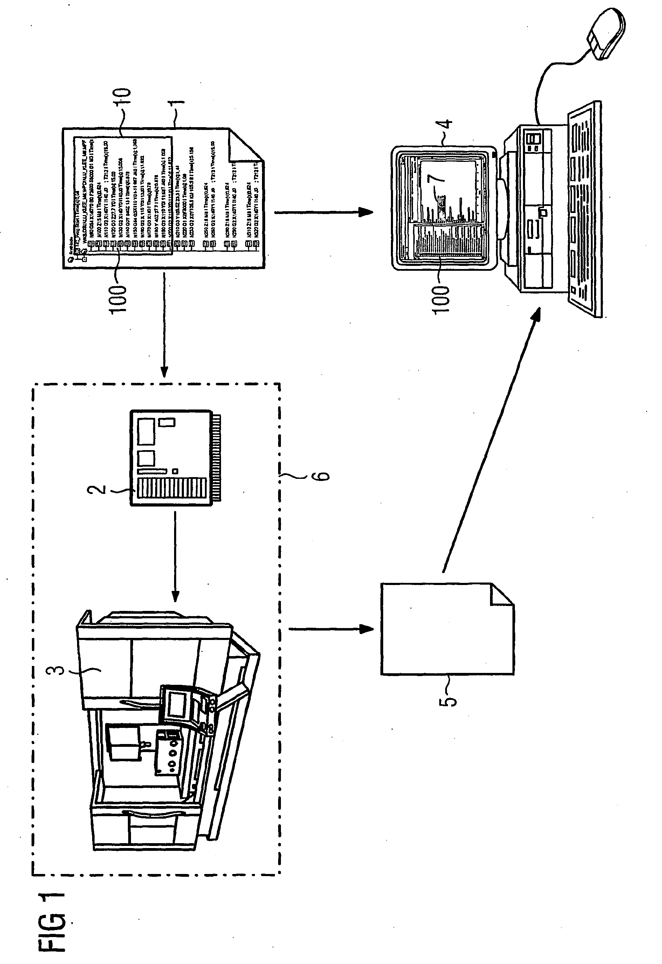

FIG 1 zeigt eine Anwendung eines Systems zur Analyse eines Fertigungsprozesses bei der Erzeugung eines Datensatzes für ein Steuerungsprogramm 1, welches auf einer numerischen Steuerung 2 gespeichert ist, um eine Fertigungseinrichtung 3 anzusteuern. Bei der Fertigungseinrichtung 3 handelt es sich um eine numerisch gesteuerte Werkzeugmaschine. Zur Erläuterung einer Ausführungsform des erfindungsgemäßen Verfahrens wird hier rein exemplarisch die Analyse eines einzelnen Steuerungsprogramms beschrieben. Zur Optimierung des gesamten Fertigungsprozesses werden die nachfolgend beschriebenen Schritte auch für alle weiteren am Fertigungsprozess beteiligten Werkzeugmaschinen durchgeführt, um deren Haupt- und Nebenzeiten im Sinne einer maximalen Gesamtauslastung ideal aufeinander abstimmen zu können.

Die Werkzeugmaschine 3 ist über ein Intranet mit einer Datenverarbeitungseinrichtung 4 verbunden. Über diese Datenverbindung wird das erste Steuerungsprogramm 1 in einen ersten Speicherbereich der Datenverarbeitungseinrichtung 4 geladen. Auf der Datenverarbeitungseinrichtung 4 ist weiterhin in einem zweiten Speicherbereich ein Simulationsprogramm installiert, mit dessen Hilfe das Steuerungsprogramm 1 unter Berücksichtigung von Echtzeitbedingungen simuliert werden soll. Die auf der Datenverarbeitungseinrichtung 4 installierte Simulationssoftware erlaubt die Simulation von Steuerungsprogrammen in einer Form, in der sie auch auf der numerischen Steuerung 2 lauffähig sind. Weiterhin wird über die Intranetverbindung ein Satz Konfigurationsdaten 5 von der Werkzeugmaschine 3 auf die Datenverarbeitungseinrichtung 4 geladen. Mit Hilfe dieser Konfigurationsdaten 5 kann ein auf der Datenverarbeitungseinrichtung 4 hinterlegtes Maschinenmodell derart konfiguriert werden, dass das Verhalten der Werkzeugmaschine 3 durch die Simulation möglichst genau nachgebildet werden kann. Beispielsweise könnten die Konfigurationsdaten 5 eine Abtastrate der numerischen Steuerung 2 enthalten, die definiert, mit welchem minimalen Zeitraster Anweisungen des Steuerungsprogramms 1 auf der numerischen Steuerung 2 abgearbeitet werden können. Eine derartige Abtastrate hat schließlich Auswirkungen auf das Echtzeitverhalten der Werkzeugmaschine 3, da sie den Zeitbedarf numerische zu verarbeitender Anweisungen des Steuerungsprogramms festlegt.

Das Steuerungsprogramm 1 besteht aus mehreren Programmteilen 10, bei denen es sich beispielsweise um Unterprogramme handeln kann. Diese Programmteile 10 sind wiederum aus einzelnen Anweisungen 100 aufgebaut. Bei den Anweisungen kann es sich um einfache, nicht mehr weiter skalierbare Operationen handeln oder um Funktionsaufrufe, die wiederum eine Reihe weiterer Anweisungen bzw. Operationen bewirken.

Zur Analyse des Laufzeitverhaltens des Steuerungsprogramms 1 wird dieses auf der Datenverarbeitungseinrichtung 4 simuliert, wobei der Echtzeitbedarf für das Steuerungsprogramm 1 oder zumindest einzelner Programmteile 10 des Steuerungsprogramms 1 ermittelt werden soll. Während der Simulation des Steuerungsprogramms 1 wird für die einzelnen Anweisungen 100 jeweils ein Echtzeitbedarf ermittelt, welches angibt, wie groß der Echtzeitbedarf auf dem Zielsystem 6 ist, den eine Operation benötigen würde, die durch die entsprechende Anweisung 100 auf der Werkzeugmaschine 3 ausgeführt wird. Die ermittelten Echtzeitbedarfswerte werden zusammen mit den zugehörigen Anweisungen 100 protokolliert. Als Informationsquelle für die Zuordnung der Echtzeitbedarfswerte zu den einzelnen Anweisungen 100 dienen das auf der Datenverarbeitungseinrichtung 4 hinterlegte Maschinenmodell des Zielsystems 6 und dessen Konfigurationsdaten 5.

Die Ergebnisse einer solchen Laufzeitanalyse des Steuerungsprogramms 1 werden anschließend über eine Ausgabemaske des Simulationsprogramms dargestellt. Beispielsweise werden hierbei für die einzelnen Anweisungen 100 horizontale Balken 7 dargestellt, die den Echtzeitbedarf der Anweisungen 100 grafisch verdeutlichen.

Die einzelnen Verfahrensschritte zur Analyse des Fertigungsprozesses sind in FIG 1 exemplarisch nur für eine Fertigungseinrichtung 3 aufgezeigt. Das Verfahren kann jedoch wie hier nicht dargestellt auch noch für mindestens eine weitere an dem Fertigungsprozess beteiligte Werkzeugmaschine durchgeführt. Ein entsprechendes weiteres Steuerungsprogramm wird wie zuvor beschrieben analysiert. Das Ergebnis dieser Analyse ist ein entsprechender weiterer Datensatz, der ebenfalls wie in FIG 1 dargestellt grafisch in Form eines Balkendiagramms dargestellt werden kann. Zur Optimierung des Fertigungsprozesses insgesamt ist eine gemeinsame Darstellung beider Datensätze auf dem Bildschirm der Datenverarbeitungseinrichtung 4 vorteilhaft, so dass ein Anwender des Systems leicht erkennen kann, an welchen Stellen der Fertigungsprozess durch Modifikation der einzelnen Steuerungsprogramme der beteiligten Werkzeugmaschinen optimiert werden kann.

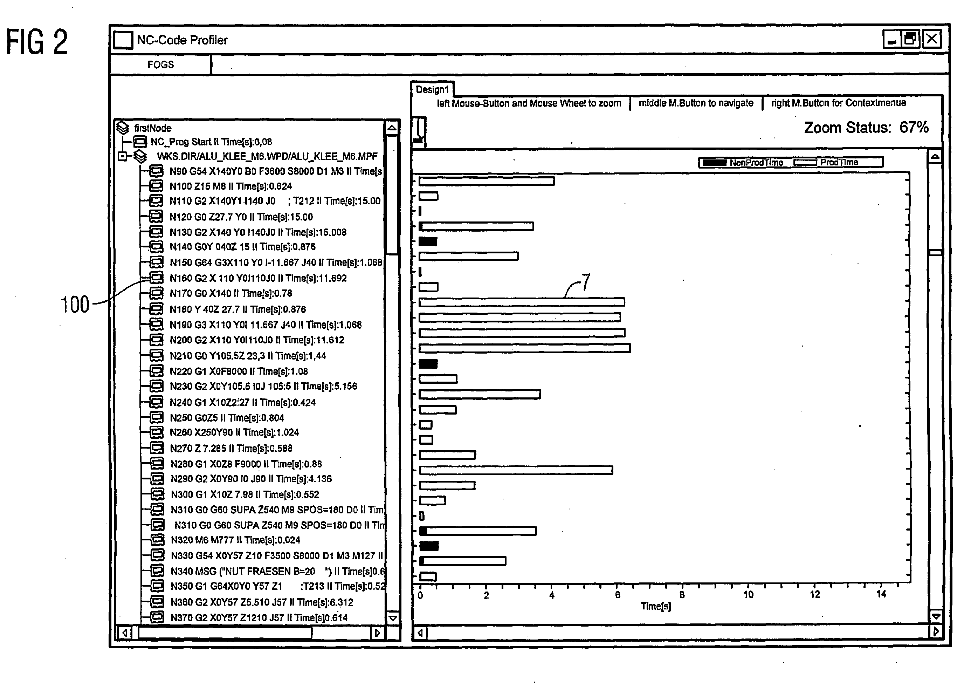

FIG 2 zeigt eine mit dem System erzeugte grafische Darstellung des zum Steuerungsprogramm 1 zugehörigen Datensatzes. Die gezeigte Bildschirmausgabe ist das Ergebnis der unter FIG 1 beschriebenen Laufzeitanalyse des Steuerungsprogramms. Die dargestellte Benutzeroberfläche ist in ein linkes und ein rechtes Fenster aufgeteilt. Im linken Fenster sind Anweisungen 100 des Steuerungsprogramms in einer hierarchischen Baumstruktur geordnet angegeben, wobei auch hier wie schon in FIG 1 nur eine Anweisung beispielhaft mit einem Bezugszeichen versehen ist. Z.B. befinden sich hierbei in der obersten Hierarchieebene das komplette Steuerungsprogramm 1, in der darunter liegenden Eben einzelne Programmteile 10 wie Unterprogramme und schließlich in der untersten Hierarchieebene die einzelnen Anweisungen 100, die Bestandteil der Programmteile 10 sind. Im rechten Bildschirmfenster sind horizontale Balken 7 angegeben, die über einer Zeitachse aufgetragen sind. Jeder Balken 7 repräsentiert den Echtzeitbedarf einer zugehörigen Anweisung 100 des Steuerungsprogramms 1. Die nicht ausgefüllten Bereiche der Balken 7 stellen dabei die produktive Hauptzeit des Zielsystems 6 dar, die eine zugehörige Anweisung 100 auf dem Zielsystem 6 bewirkt. Die ausgefüllten Bereiche der Balken 7 stellen hingegen die Nebenzeiten der Werkzeugmaschine 3 dar. Diese beschreiben die Zeitintervalle, in denen die Werkzeugmaschine 3 nicht produktiv ist. Auf diese Art und Weise kann ein Entwickler des Steuerungsprogramms 1 sehr leicht den Optimierungsbedarf seines Programms erkennen. Dies gilt insbesondere dann, wenn zeitgleich eine oder mehrere weitere Datensätze weiterer Steuerungsprogramme visualisiert werden, wobei die weiteren Steuerungsprogramme zur Steuerung weiterer Fertigungseinrichtungen vorgesehen sind, die an dem Fertigungsprozess beteiligt sind.

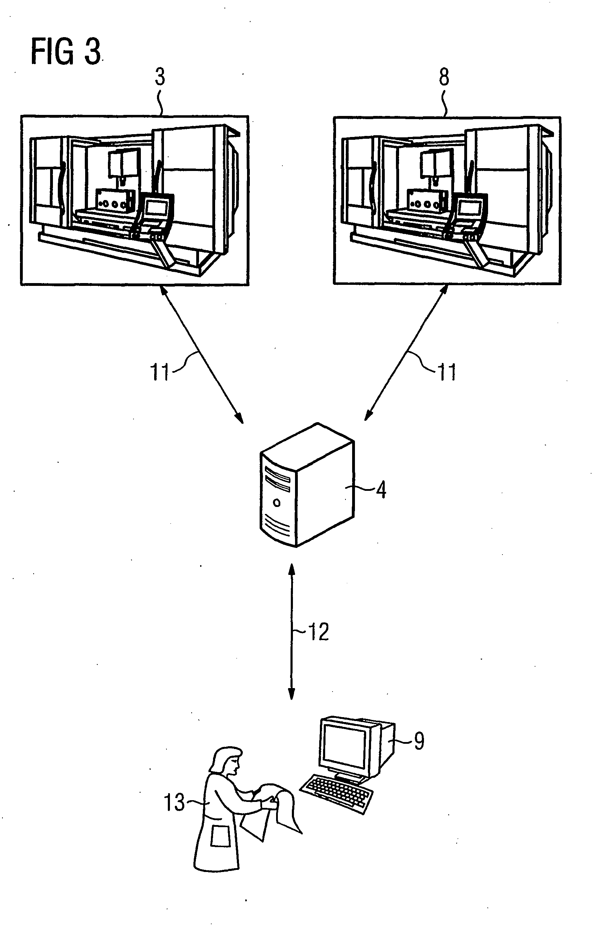

FIG 3 zeigt ein als Clientserverarchitektur ausgeführtes System zur Analyse eines Fertigungsprozesses, an dem eine Fertigungseinrichtung 3 und eine weitere Fertigungseinrichtung 8 in Parallelbetrieb beteiligt sind. Die beiden Fertigungseinrichtungen 3,8 sind über jeweils eine Intranet-Verbindung 11 mit einer Datenverarbeitungseinrichtung 4 verbunden. Die Datenverarbeitungseinrichtung 4 übernimmt die Rolle eines Webservers und ist über eine Internetverbindung 12 datentechnisch mit einem Clientcomputer 9 verbunden.

Auf der Datenverarbeitungseinrichtung 4 ist ein Simulationsprogramm wie beispielsweise VNCK installiert, mit dem das Echtzeitverhalten realer Fertigungsanlagen nachgebildet werden kann. Zusätzlich sind in einem Speicher der Datenverarbeitungseinrichtung 4 Maschinenmodelle für die Fertigungseinrichtungen 3, 8 hinterlegt.

Zur Anwendung des dargestellten Systems ist nun folgendes Szenario denkbar. Ein Anwender 13 ist mit der Aufgabe beauftragt, den Mehrmaschinenfertigungsprozess zu optimieren, um eine möglichst hohe Maschinenauslastung sowohl für die Fertigungseinrichtung 3 als auch für die weitere Fertigungseinrichtung 8 zu ermöglichen und somit einen maximal effizienten Fertigungsprozess zu gewährleisten. Zu diesem Zweck ist auf dem Clientcomputer 9 ein Analysewerkzeug installiert. Mit Hilfe des Analysewerkzeugs lassen sich Datensätze der beiden Fertigungseinrichtungen 3, 8 grafisch darstellen, die aus einer Analyse ihres Laufzeitverhaltens bzw. des Laufzeitverhaltens ihrer Steuerungsprogramme resultieren. Die Datensätze werden mit Hilfe des auf der Datenverarbeitungseinrichtung 4 installierten Simulationsprogramms generiert.

Zur Simulation des Fertigungsprozesses wird zunächst sowohl von der Fertigungseinrichtung 3 als auch von der weiteren Fertigungseinrichtung 8 die jeweilige Maschinenkonfiguration über die Intranetverbindung 11 geladen. Anhand der geladenen Maschinenkonfigurationen können die zugehörigen Maschinemodelle entsprechend konfiguriert werden, um somit die realen Anlagen möglichst realitätsnah abbilden zu können. Weiterhin werden über die Intranetverbindung 11 die zur Steuerung der Fertigungseinrichtungen 3, 8 vorgesehenen Steuerungsprogramme auf die Datenverarbeitungseinrichtung 4 geladen. Anhand der Steuerungsprogramme, der Maschinenmodelle und der Maschinenkonfigurationsdaten wird für beide Fertigungseinrichtungen 3,8 per Simulation jeweils ein Datensatz generiert, der Informationen über das Echtzeitverhalten des numerisch gesteuerten Fertigungsprozesses enthält. Diese Datensätze können zum einen die Hauptzeiten der entsprechenden Fertigungseinrichtungen 3, 8 enthalten als auch, wenn entsprechende Basisinformationen auf der Datenverarbeitungseinrichtung 4 hinterlegt sind, die Nebenzeiten, die während des Prozesses auftreten. Die grafische Darstellung der Datensätze auf dem Clientcomputer 9 ermöglicht es dem Anwender 13, Optimierungspotential des Mehrmaschinenfertigungsprozesses zu erkennen und die Steuerungsprogramme der beiden Fertigungseinrichtungen 3, 8 gegebenenfalls entsprechend zu modifizieren und somit die Maschinenauslastungen zu erhöhen.

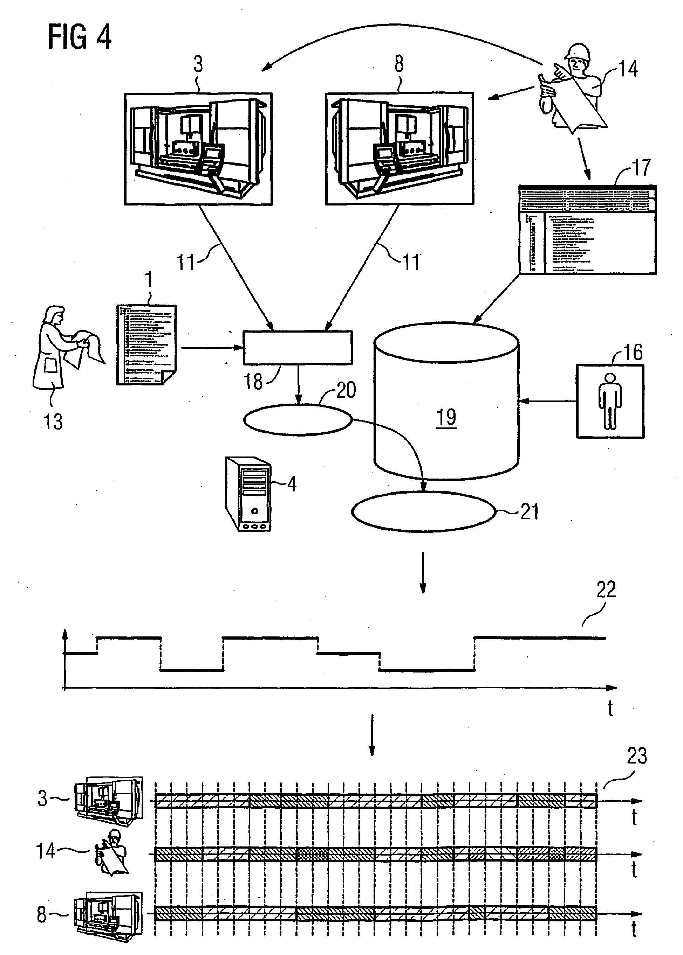

FIG 4 zeigt eine schematische Darstellung eines Verfahrens zur Analyse eines Fertigungsprozesses, an dem eine Fertigungseinrichtung 3 und eine weitere Fertigungseinrichtung 8 beteiligt sind. Die beiden Fertigungseinrichtungen 3, 8 werden von einem Maschinenbediener 14 bedient, soweit manuelle Bedienvorgänge für den Fertigungsprozess notwendig sind. Da für beide Fertigungseinrichtungen 3, 8 nur die eine Bedienperson 14 zur Verfügung steht, ist es sinnvoll, bei der Planung des Mehrmaschinenprozesses dafür zu sorgen, dass die notwendigen manuellen Bedienprozesse bei den beiden Fertigungseinrichtungen 3, 8 nicht gleichzeitig anfallen. Derartige Bedienkollisionen sind jedoch insbesondere bei komplexen Fertigungsprozessen nur relativ schwer im Vorfeld vorherzusehen. Bei dem dargestellten Analyseverfahren wird daher ein auf einer Datenverarbeitungseinrichtung 4 installiertes Simulationsprogramm 18 verwendet, um derartige Kollisionsvorhersagen zu treffen.

Die Datenverarbeitungseinrichtung 4 ist über eine Intranetverbindung 11 sowohl mit der Fertigungseinrichtung 3 als auch mit der weiteren Fertigungseinrichtung 8 verbunden. In einem Speicher 19 der Datenverarbeitungseinrichtung 4 sind darüber hinaus jeweils ein Maschinenmodell für die beiden Fertigungseinrichtung 3, 8 abgespeichert sowie Verhaltensmodelle und Zeittabellen, die das typische Verhalten des Maschinenbedieners 14 wiedergeben. Entsprechende Zeittabellen und/oder Verhaltensmodelle sind vom Maschinenbediener 14 über ein Webportal 17 der Datenverarbeitungseinrichtung 4 modifizierbar und können somit an geänderte Arbeitsbedingungen angepasst werden. Die im Speicher 19 abgelegten Verhaltensmodelle bzw. die genannten Bedienregeln können auch Ergebnis einer Ergonomiesimulation 16 sein. Diese Ergonomiesimulationsergebnisse 16 werden ebenfalls im Speicher 19 der Datenverarbeitungseinrichtung 4 abgelegt.

Zur Planung des Fertigungsprozesses erstellt ein Anwender 13 sowohl für die Fertigungseinrichtung 3 als auch für die weitere Fertigungseinrichtung 8 jeweils ein Steuerungsprogramm 1. Beide Steuerungsprogramme 1, von denen hier exemplarisch nur eins gezeigt ist, werden in die Datenverarbeitungseinrichtung 4 geladen und dort unter Berücksichtigung der im Speicher 19 abgelegten Informationen und mit Hilfe des Simulationsprogramms 18 simuliert. Bei der Simulation werden neben den entsprechenden Maschinenmodellen der Fertigungseinrichtungen 3, 8 auch ihre Konfigurationsdaten berücksichtigt, die gegebenenfalls über die Intranetverbindung 11 in die Datenverarbeitungseinrichtung 4 geladen werden.

Die Simulationsergebnisse 20 erhalten zunächst nur eine zeitliche Verteilung der Hauptzeiten, also der Zeiten, während der die Fertigungseinrichtungen 3, 8 produktiv sind. Diese Simulationsergebnisse 20 werden schließlich noch auf Basis der im Speicher 19 abgelegten Verhaltensmodelle bzw. Zeittabellen mit den während des Fertigungsprozesses anfallenden Nebenzeiten angereichert. Es resultiert für jede der beiden Fertigungseinrichtungen 3, 8 schließlich ein Datensatz 21, der für die zugehörige Fertigungseinrichtung 3, 8 eine zeitliche Verteilung der Haupt- und Nebenzeiten während des Fertigungsprozesses dokumentiert.

Für jede der beiden Fertigungseinrichtungen 3, 8 können die zugehörigen Datensätze 21 in Form einer ersten Bildschirmausgabe 22 zunächst auch separat dargestellt werden. Manuell bedingte Nebenzeiten haben hierbei den niedrigsten Ordinatenwert. Durch den automatischen Betrieb bedingte Nebenzeiten haben den mittleren Ordinatenwert und die produktiven Hauptzeiten der entsprechenden Fertigungseinrichtung 3,8 erhalten den höchsten Ordinatenwert in der Darstellung.

Da diese Ergebnisse für beide Fertigungseinrichtungen 3, 8 vorliegen, kann nun mit Hilfe eines Analysetools eine zweite Bildschirmausgabe 23 generiert werden, anhand derer der Mehrmaschinenbetrieb unter Berücksichtigung von Bedienereingriffen sehr gut analysiert und schließlich optimiert werden kann. Die grob schraffiert dargestellten Balken zeigen hierbei für die Fertigungseinrichtungen 3, 8 an, wann sich diese im Autobetrieb befinden. Für den Maschinenbediener 14 zeigt der grob schraffiert dargestellte Balken an, wann er Pause hat. Dies ist konsequenter Weise nur dann der Fall, wenn sich beide Fertigungseinrichtungen 3, 8 im Autobetrieb befinden. Die eng schraffierten Balken zeigen hingegen an, wann für die jeweilige Fertigungseinrichtung 3, 8 eine manuelle Bedienung notwendig ist. Folglich ist für den Maschinenbediener 14 immer dann ein eng schraffierten Balken dargestellt, wenn sich eine der beiden Fertigungseinrichtungen 3, 8 im Betriebszustand "manuelle Bedienung" befinden.

Haben sowohl die Fertigungseinrichtung 3 als auch die weitere Fertigungseinrichtung 8 den Betriebszustand "manuelle Bedienung", so führt dies zu einer manuellen Bedienkollision, die im Zeitdiagramm des Maschinenbedieners 14 als kreuzschraffierter Balken dargestellt ist. Eine solche manuelle Bedienkollision führt zu einer Verzögerung des Fertigungsprozesses und sollte daher in einem anschließenden Optimierungsschritt behoben werden.

Anhand der dargestellten zweiten Bildschirmausgabe 23, die mit Hilfe eines Analysewerkzeugs erstellt wurde, kann der anschließende Optimierungsschritt manuell durch den Anwender 13 durchgeführt werden. Alternativ ist aber auch denkbar, dass anhand der Datensätze 21, die der zweiten Bildschirmausgabe 23 zugrunde liegen, eine automatische Ermittlung von Optimierungskriterien stattfindet, die eine Modifikation der Steuerungsprogramme der Fertigungseinrichtungen 3, 8 zur Folge haben und auf diese Art und Weise die Maschinenauslastung steigern.

## Patentansprüche

1. Verfahren zur Analyse eines Fertigungsprozesses, an dem mindestens eine, von einem Steuerungsprogramm gesteuerte Fertigungseinrichtung (3) beteiligt ist, wobei das Verfahren folgenden Verfahrenschritten aufweist:
- Simulation mindestens eines Programmteils (10) des Steuerungsprogramms (1) mit einem Simulationsprogramm (18) und Protokollieren von hierbei ausgeführten Anweisungen (100),
- wobei zur Simulation des mindestens einen Programmteils (10) und zur Erzeugung eines Datensatzes (21) auf ein für die Fertigungseinrichtung (3) charakteristisches Maschinenmodell und dessen Konfigurationsdaten (5) zugegriffen wird,
- Erzeugen des zugehörigen Datensatzes (21), in dem den protokollierten Anweisungen (100) jeweils der während der Simulation ermittelte Echtzeitbedarf einer Aktion zugeordnet ist, die durch die protokollierte Anweisung (100) auf der Fertigungseinrichtung (3) bewirkt wird
**dadurch gekennzeichnet, dass**
die während einer Ausführung des Programmteils (10) auf der Fertigungseinrichtung (3) real anfallenden Nebenzeiten anhand einer auf der Datenverarbeitungseinrichtung (4) abgelegten Zeittabelle und/oder eines auf der Datenverarbeitungseinrichtung (4) abgelegten Verhaltensmodells ermittelt und in dem Datensatz (21) protokolliert werden.

2. Verfahren nach Anspruch 1,
**dadurch gekennzeichnet, dass**
das Maschinenmodell und die Konfigurationsdaten (5) auf einer mit der Fertigungseinrichtung (3) datentechnisch verbundenen Datenverarbeitungseinrichtung (4) gespeichert sind.

3. Verfahren nach Anspruch 1,
wobei das Verfahren mit einem Clientcomputer (9) durchgeführt wird, der über ein Intranet oder das Internet mit der Datenverarbeitungseinrichtung (4) verbunden ist.

4. Verfahren nach Anspruch 3,
wobei die Zeittabelle und/oder das Verhaltensmodell vom Clientcomputer (9) aus modifiziert werden.

5. Verfahren nach einem der vorhergehenden Ansprüche,
wobei der Echtzeitbedarf der von den protokollierten Anweisungen (100) bewirkten Aktionen innerhalb des zugehörigen Datensatzes (21) zu einer Bearbeitungszeit aufsummiert wird, die für einen Ablauf des Programmteils (10) auf der Fertigungseinrichtung (6) benötigt wird.

6. Verfahren nach einem der vorhergehenden Ansprüche,
wobei die Anzahl der Ausführungen der Anweisungen (100) während der Simulation des Programmteils (10) protokolliert wird.

7. Verfahren nach einem der vorhergehenden Ansprüche,
wobei das Steuerungsprogramm (1) ein NC Programm für als numerisch gesteuerte NC Maschinen ausgeführte Fertigungseinrichtungen ist.

8. Verfahren nach einem der vorherigen Ansprüche,
wobei das Verfahren für mindestens eine weitere am Fertigungsprozess beteiligte und von einem weiteren Steuerungsprogramm gesteuerte Fertigungseinrichtung (8) durchgeführt wird.

9. Verfahren nach Anspruch 8,
wobei die Datensätze (21) der beiden Steuerungsprogramme in einer gemeinsamen Darstellung (23) insbesondere grafisch visualisiert werden.

10. Verfahren nach Anspruch 8 oder 9,
wobei die Datensätze (21) der beiden Steuerungsprogramme zur Ableitung von Optimierungskriterien für den Fertigungsprozess miteinander verglichen werden.

11. System zur Analyse eines Fertigungsprozesses, an dem mindestens eine, von einem Steuerungsprogramm gesteuerte Fertigungseinrichtung (3) beteiligt ist, wobei das System
- einen ersten Speicherbereich für das Steuerungsprogramm (1),
- einen zweiten Speicherbereich für ein Simulationsprogramm (18) und
- eine Ausführungseinheit zur Simulation mindestens eines Programmteils (10) des Steuerungsprogramms (1) mit dem Simulationsprogramm (18), zum Protokollieren von hierbei ausgeführten Anweisungen (100) und zum Erzeugen eines zugehörigen Datensatzes (21), in dem den protokollierten Anweisungen (100) jeweils der während der Simulation ermittelte Echtzeitbedarf einer Aktion zugeordnet ist, die durch die protokollierte Anweisung (100) auf der Fertigungseinrichtung (3) bewirkt wird,
- sowie eine mit der mindestens einen Fertigungseinrichtung (3) datentechnisch verbundene Datenverarbeitungseinrichtung (4), die einen dritten Speicherbereich umfasst, in dem ein für die Fertigungseinrichtung (3) charakteristisches Maschinenmodell und dessen Konfigurationsdaten (5) abgelegt sind
aufweist, **dadurch gekennzeichnet, daß** die Datenverarbeitungseinrichtung (4)
- einen vierten Speicherbereich, in dem eine Zeittabelle und/oder ein Verhaltensmodell abgelegt ist,
- Mittel zur Ermittlung während einer Ausführung des jeweiligen Programmteils (10) auf der Fertigungseinrichtung (3) real anfallender Nebenzeiten anhand der Zeittabelle und/oder des Verhaltensmodells und
- Mittel zur Protokollierung der Nebenzeiten im zugehörigen Datensatz (21)
aufweist.

12. System nach Anspruch 11,
wobei die Datenverarbeitungseinrichtung (4) über ein Intranet oder das Internet mit einem Clientcomputer (9) verbunden ist.

13. System nach Anspruch 11,
wobei die Zeittabelle und/oder das Verhaltensmodell vom Clientcomputer (9) aus modifizierbar sind.

14. System nach einem der Ansprüche 11 bis 13,
wobei das System Mittel zum Aufsummieren des Echtzeitbedarfes der von den protokollierten Anweisungen (100) bewirkten Aktionen innerhalb des Datensatzes (21) zu einer Bearbeitungszeit aufweist, die für einen Ablauf des Programmteils (10) auf der Fertigungseinrichtung (3) benötigt wird.

15. System nach einem der Ansprüche 11 bis 13,
wobei das System Mittel zum Protokollieren der Anzahl der Ausführungen der Anweisungen (100) während der Simulation des Programmteils (10) aufweist.

16. System nach einem der Ansprüche 11 bis 15,
wobei das Steuerungsprogramm (1) ein NC Programm für als numerisch gesteuerte NC Maschinen ausgeführte Fertigungseinrichtungen ist.

17. System nach Anspruch 11 bis 16,
wobei das System ein Analysewerkzeug zur Ableitung von Optimierungskriterien für den Fertigungsprozess durch Vergleich von Datensätze (21) mehrer Fertigungseinrichtungen aufweist.

18. Computerprogrammprodukt, welches zur Durchführung eines Verfahrens nach einem der Ansprüche 1 bis 10 bei einem Ablauf auf einem Computer eingerichtet ist.

## Claims

1. Method for analysing a production process involving at least one production device (3) controlled by a control program, the method comprising the following steps:
- simulating at least one program section (10) of the control program (1) using a simulation program (18) and logging instructions (100) executed during said simulation,
- wherein to simulate the at least one program section (10) and to generate a data record (21) a machine model characterising the production device (3) and its configuration data (5) are accessed,
- generating the associated data record (21) in which the logged instructions (100) are each assigned the real-time requirement of an action which is determined during the simulation and effected on the production device (3) by the logged instruction (100),
**characterised in that**
on the basis of a time table stored on the data processing device (4) and/or of a behaviour model stored on the data processing device (4), the actually occurring non-productive times arising during execution of the program section (10) on the production device (3) are determined and logged in the data record (21).

2. Method according to claim 1,
**characterised in that**
the machine model and the configuration data (5) are stored on a data processing device (4) connected to the production device (3) via a data link.

3. Method according to claim 1,
wherein the method is carried out using a client computer (9) which is connected to the data processing device (4) via an intranet or the Internet.

4. Method according to claim 3,
wherein the time table and/or the behaviour model are modified from the client computer (9).

5. Method according to one of the preceding claims,
wherein the real-time requirement of the actions effected by the logged instructions (100) are added together within the associated data record (21) to produce a machining time required for execution of the program section (10) on the production device (6).

6. Method according to one of the preceding claims,
wherein the number of executions of the instructions (100) during simulation of the program section (10) is logged.

7. Method according to one of the preceding claims,
wherein the control program (1) is an NC program for production devices implemented as numerically controlled NC machines.

8. Method according to one of the preceding claims,
wherein the method is carried out for at least one other production device (8) involved in the production process and controlled by another control program.

9. Method according to claim 8,
wherein the data records (21) of the two control programs are in particular graphically visualised in a common display (23).

10. Method according to claim 8 or 9,
wherein the data records (21) of the two control programs are compared with one another to derive optimisation criteria for the production process.

11. System for analysing a production process involving at least one production device (3) controlled by a control program, wherein the system has
- a first memory area for the control program (1),
- a second memory area for a simulation program (18) and
- an execution unit for simulating at least one program section (10) of the control program (1) using the simulation program (18), for logging instructions (100) executed during said simulation and for generating an associated data record (21) in which the logged instructions (100) are each assigned the real-time requirement of an action which is determined during the simulation and effected by the logged instruction (100) on the production device (3),
- and a data processing device (4) connected to the at least one production device (3) via a data link and having a third memory area in which a machine model characterising the production device (3) and its configuration data (5) are stored
**characterised in that** the data processing device (4) has
- a fourth memory area in which a time table and/or a behaviour model is stored,
- means of determining, on the basis of the time table and/or behaviour model, the non-productive times actually arising during execution of the respective program section (10) on the production device (3) and
- means of logging the non-productive times in the associated data record (21).

12. System according to claim 11,
wherein the data processing device (4) is connected to a client computer (9) via an intranet or the Internet.

13. System according to claim 11,
wherein the time table and/or the behaviour model can be modified from the client computer (9).

14. System according to one of claims 11 to 13,
wherein the system has means of adding together, within the data record (21), the real-time requirement of the actions effected by the logged instructions (100) to produce a machining time required for execution of the program section (10) on the production device (3).

15. System according to one of claims 11 to 13,
wherein the system has means of logging the number of executions of the instructions (100) during simulation of the program section (10).

16. System according to one of claims 11 to 15,
wherein the control program (1) is an NC program for production devices implemented as numerically controlled NC machines.

17. System according to claim 11 to 16,
wherein the system has an analysis tool for deriving optimisation criteria for the production process by comparing data records (21) of a plurality of production devices.

18. Computer program product which is designed to carry out a method according to one of claims 1 to 10 when run on a computer.

## Revendications

1. Procédé pour analyser un processus de fabrication, dans lequel est impliqué au moyen un dispositif de fabrication (3) commandé par un programme de commande, le procédé comprenant les étapes de procédé suivantes :
- simulation d'au moins une partie de programme (10) du programme de commande (1) avec un programme de simulation (18) et consignation de directives (100) exécutées à cette occasion,
- sachant qu'on a recours à un modèle de machine caractéristique du dispositif de fabrication (3) et à ses données de configuration (5) pour simuler l'au moins une partie de programme (10) et pour générer un ensemble de données (21),
- génération de l'ensemble de données (21) spécifique, dans lequel à chaque fois les besoins en temps réel d'une action déterminés pendant la simulation sont attribués aux directives (100) consignées, laquelle action est entraînée par la directive (100) consignée sur le dispositif de fabrication (3),
**caractérisé en ce que**
les temps secondaires survenant réellement pendant une exécution de la partie de programme (10) sur le dispositif de fabrication (3) sont déterminés à l'aide d'un tableau de temps déposé sur le dispositif de traitement de données (4) et/ou d'un modèle de comportement déposé sur le dispositif de traitement de données (4) et sont consignés dans l'ensemble de données (21).

2. Procédé selon la revendication 1,
**caractérisé en ce que**
le modèle de machine et les données de configuration (5) sont stockés sur un dispositif de traitement de données (4) relié au niveau informatique au dispositif de fabrication (3).

3. Procédé selon la revendication 1,
le procédé étant mis en oeuvre avec un ordinateur client (9), qui est relié par Intranet ou Internet au dispositif de traitement de données (4).

4. Procédé selon la revendication 3,
le tableau de temps et/ou le modèle de comportement étant modifié(s) à partir de l'ordinateur client (9).

5. Procédé selon l'une quelconque des revendications précédentes,
les besoins en temps réels des actions entraînées par les directives (100) consignées étant cumulés à l'intérieur de l'ensemble de données spécifique (21) en un temps de traitement, qui est utilisé pour un déroulement de la partie de programme (10) sur le dispositif de fabrication (6).

6. Procédé selon l'une quelconque des revendications précédentes,
le nombre des exécutions des directives (100) étant consigné pendant la simulation de la partie de programme (10).

7. Procédé selon l'une quelconque des revendications précédentes,
le programme de commande (1) étant un programme NC pour des dispositifs de fabrication réalisés sous forme de machines NC à commande numérique.

8. Procédé selon l'une quelconque des revendications précédentes,
le procédé étant mis en oeuvre pour au moins un autre dispositif de fabrication (8) impliqué dans le processus de fabrication et commandé par un autre programme de commande.

9. Procédé selon la revendication 8,
les ensembles de données (21) des deux programmes de commande étant visualisés en particulier sous forme graphique dans une représentation (23) commune.

10. Procédé selon la revendication 8 ou 9,
les ensembles de données (21) des deux programmes de commande étant comparés les uns avec les autres pour la déduction de critères d'optimisation pour le processus de fabrication.

11. Système pour analyser un processus de fabrication, dans lequel au moins un dispositif de fabrication (3) commandé par un programme de commande est impliqué, le système présentant
- une première zone de mémoire pour le programme de commande (1),
- une seconde zone de mémoire pour un programme de simulation (18), et
- une unité d'exécution pour la simulation d'au moins une partie de programme (10) du programme de commande (1) avec le programme de simulation (18), pour la consignation de directives (100) exécutées à cette occasion et pour la génération d'un ensemble de données (21) spécifique, dans lequel à chaque fois les besoins en temps réel d'une action déterminés pendant la simulation d'une action sont attribués aux directives (100) consignées, laquelle action est entraînée par la directive (100) consignée sur le dispositif de fabrication (3),et
- un dispositif de traitement de données (4) relié au niveau informatique à l'au moins un dispositif de fabrication (3), lequel dispositif de traitement comprend une troisième zone de mémoire dans laquelle un modèle de machine caractéristique du dispositif de fabrication (3) et ses données de configuration (5) sont déposés,
**caractérisé en ce que** le dispositif de traitement de données (4) présente :
- une quatrième zone de mémoire dans laquelle un tableau de temps et/ou un modèle de comportement est/sont déposé(s),
- des moyens pour déterminer des temps secondaires survenant réellement pendant une exécution de la partie de programme (10) respective sur le dispositif de fabrication (3) à l'aide du tableau de temps et/ou du modèle de comportement, et
- des moyens pour la consignation des temps secondaires dans l'ensemble de données (21) spécifique.

12. Système selon la revendication 11,
le dispositif de traitement de données (4) étant relié par Intranet et Internet à un ordinateur client (9).

13. Système selon la revendication 11,
le tableau de temps et/ou le modèle de comportement pouvant être modifié(s) à partir de l'ordinateur client (9).

14. Système selon l'une quelconque des revendications 11 à 13,
le système présentant des moyens pour le cumul des besoins en temps réel des actions occasionnées par les directives (100) consignées à l'intérieur de l'ensemble de données (21) en un temps de traitement qui est utilisé pour un déroulement de la partie de programme (10) sur le dispositif de fabrication (3).

15. Système selon l'une quelconque des revendications 11 à 13,
le système présentant les moyens pour la consignation du nombre des exécutions des directives (100) pendant la simulation de la partie de programme (10).

16. Système selon l'une quelconque des revendications 11 à 15,
le programme de commande (1) étant un programme NC pour des dispositifs de fabrication réalisés sous forme de machines NC à commande numérique.

17. Système selon les revendications 11 à 16,
le système présentant un outil d'analyse pour la déduction de critères d'optimisation pour le processus de fabrication par comparaison d'ensembles de données (21) de plusieurs dispositifs de fabrication.

18. Produit de programme informatique, qui est aménagé pour mettre en oeuvre un procédé selon l'une quelconque des revendications 1 à 10 lors d'un déroulement sur un ordinateur.
